# EUROPÄISCHE PATENTSCHRIFT

(11) **EP 3 573 780 B1**
(45) Veröffentlichungstag und Bekanntmachung des Hinweises auf die Patenterteilung: **25.12.2024**
(21) Anmeldenummer: 18701726.4
(22) Anmeldetag: 23.01.2018
(51) Int. Cl.: B23K 9/28, C09J 9/02, H01B 1/20

(54) **BAUELEMENT ODER HALTEELEMENT, DAS FÜR DIE PLASMABEARBEITUNG VON WERKSTÜCKEN EINSETZBAR IST UND VERFAHREN ZUR HERSTELLUNG EINER MECHANISCHEN VERBINDUNG ZWISCHEN EINEM BAUELEMENT UND EINEM HALTEELEMENT**
COMPONENT OR RETAINING ELEMENT WHICH IS USABLE FOR THE PLASMA PROCESSING OF WORKPIECES AND METHOD FOR PRODUCING A MECHANICAL CONNECTION BETWEEN A COMPONENT AND A RETAINING ELEMENT
COMPOSANT OU ÉLÉMENT DE RETENUE UTILISABLE POUR LE TRAITEMENT AU PLASMA DE PIÈCES À USINER ET PROCÉDÉ POUR PRODUIRE UNE LIAISON MÉCANIQUE ENTRE UN COMPOSANT ET UN ÉLÉMENT DE RETENUE

(30) Priorität: 25.01.2017 DE 102017201159
(43) Veröffentlichungstag der Anmeldung: 04.12.2019
(73) Patentinhaber: Kjellberg-Stiftung, 03238 Finsterwalde (DE)
(72) Erfinder: SCHUSTER, Henning, 01279 Dresden (DE); PÄTZ, Felix, 03103 Neupetershain (DE); SCHNICK, Michael, 09353 Oberlungwitz (DE)
(74) Vertreter: Pfenning, Meinig & Partner mbB
(86) Internationale Anmeldenummer: PCT/EP2018/051578
(87) Internationale Veröffentlichungsnummer: WO 2018/138084

(56) Entgegenhaltungen:
- EP-A1- 0 544 386
- EP-A2- 2 157 149
- DE-A1- 102009 054 427
- DE-A1- 102016 006 626

## Beschreibung

Die Erfindung betrifft ein Bauelement oder Halteelement, das für die Plasmabearbeitung von Werkstücken einsetzbar ist sowie ein Verfahren zur Herstellung. Solche Bau- oder Halteelemente können insbesondere beim Wolfram-Inertgasschweißen (WIG), dem Plasmaschweißen oder dem Plasmaschneiden eingesetzt werden. Sie können dabei bevorzugt Bestandteile eines Plasmabrenners sein.

Dabei kann eine mechanische Verbindung eines Bauelements mit einem Halteelement durch Form- und/oder Kraftschluss, beispielsweise in Form einer Schraubverbindung oder einer Presspassung hergestellt werden. In jedem Fall sind für eine mechanische Verbindung genutzte Bereiche eines jeweiligen Bau- und Halteelements komplementär zueinander ausgebildet. In den Bereichen ist beispielsweise ein Innen- oder Außengewinde ausgebildet, mit dem eine form- und kraftschlüssige Verbindung zwischen Bau- und Halteelement hergestellt werden kann. Bei einer Presspassung können eine Vertiefung (insbesondere eine Bohrung) in einem Halteelement und eine komplementäre Außenkontur mit entsprechenden Abmaßen, die an einem Bauelement ausgebildet ist, für eine kraftschlüssige Verbindung bei geeigneter jeweiliger Dimensionierung genutzt werden.

Bei der Verbindung von Bau- und jeweiligem Halteelement ist zumindest eine gute thermische Leitfähigkeit gewünscht. In einigen Fällen ist auch eine elektrische Leitfähigkeit im Verbindungsbereich erforderlich. Hierfür werden üblicherweise so genannte Leitpasten eingesetzt, die eine pastöse Konsistenz aufweisen und auf zumindest eine der Oberflächen eines Bauelements oder Halteelements im für die Herstellung der Verbindung genutzten Bereich appliziert werden. Dabei ist es besonders nachteilig, dass eine genaue Dosierung und ein lokal homogener Auftrag einer Leitpaste nicht oder nur sehr selten gelingt. Dadurch kommt es zum Einen dazu, dass während des Betriebes Leitpaste freigesetzt wird und auf die Oberfläche des bearbeiteten Werkstücks oder in einen Plasmastrahl gelangen kann. Dies kann zu erheblichen Qualitätsverlusten führen.

Andererseits kann es insbesondere zu einer inhomogenen Verteilung der aufgetragenen Leitpaste auf der jeweiligen Oberfläche kommen, wodurch lokal sehr unterschiedliche thermische und ggf. auch tribologische Bedingungen auftreten, die wiederum zu einem lokalen Verschweißen, dem so genannten "Fressen" führen können. Dadurch kann insbesondere ein erforderlicher Austausch eines geschädigten oder verschlissenen Bauelements an einem Plasmabrenner problematisch sein und es dabei sogar zu einer Beschädigung am Plasmabrenner kommen kann, obwohl lediglich ein Verschleißteil, wie beispielsweise eine Elektrode oder Düse ausgetauscht werden sollte.

So ist aus EP 0 544 386 A1 eine beschichtete Anordnung und ein Herstellungsverfahren bekannt, die für Schweißbrenner eingesetzt werden kann.

Aus EP 2 175 149 A2 gehen Möglichkeiten zur Verwendung elektrisch leitfähiger Klebstoffzusammensetzungen hervor, in denen Kohlenstoffnanoröhren enthalten sind.

DE 10 2016 006 626 A1, die die Grundlage für den Oberbegriff der unabhängigen Ansprüche bildet, betrifft Mehrfachkomponentelektroden für einen Plasmaschneidbrenner.

In DE 10 2009 054 427 A1 ist ein Verfahren zum Aufbringen von Kohlenstoff/Zinn Gemengen auf Metall- oder Legierungsschichten offenbart.

Es ist daher Aufgabe der Erfindung, Möglichkeiten für die Verbesserung der Bedingungen an einer mechanischen Verbindung zwischen einem Bauelement und einem dazu geeigneten Halteelement, die bei einer thermischen Plasmabearbeitung eingesetzt werden, anzugeben, und dabei insbesondere eine verbesserte und sichere thermische sowie ggf. eine elektrische Leitfähigkeit in Verbindung mit einer sicheren und vereinfachten Austauschbarkeit zu ermöglichen.

Erfindungsgemäß wird diese Aufgabe mit einem Element, das die Merkmale des Anspruchs 1 aufweist, gelöst. Ein Verfahren zur Herstellung ist mit dem Anspruch 9 definiert. Vorteilhafte Ausgestaltungen und Weiterbildungen der Erfindung können mit in untergeordneten Ansprüchen bezeichneten Merkmalen realisiert werden.

Ein erfindungsgemäßes Bauelement ist mit einem Halteelement oder ein Halteelement mit einem Bauelement in einem komplementär ausgebildeten Bereich mechanisch verbindbar ausgebildet.

Erfindungsgemäß ist die Oberfläche eines Bauelements oder eines Halteelements im komplementär ausgebildeten Bereich ausschließlich mit einer mit Partikeln gebildeten Beschichtung versehen. Dabei sind die Partikel elektrisch und thermisch leitfähig.

In einem Beispiel, das nicht der Erfindung entspricht, ist die Beschichtung mit einer rein organischen chemischen Verbindung, die mit Fluor gebildet ist oder die Beschichtung ist dabei mit einem Polyamid gebildet. In diesem Beispiel bildet eine mit Vertiefungen, Durchbrechungen oder Erhebungen ausgebildete Schicht, die aus einer dieser organischen Verbindungen gebildet ist, die Beschichtung. Dabei können mit einer entsprechend aus organischem Werkstoff gebildete Beschichtung eine ausreichende Temperaturbeständigkeit und ausreichend tribologische Eigenschaften erreicht werden, die zumindest das bereits erwähnte "Fressen" verhindern können.

Wird die Beschichtung nur mit Partikeln gebildet, können diese Eigenschaften ebenfalls adäquat erreicht werden. Es kann sogar eine verbesserte thermische und elektrische Leitfähigkeit im Verbindungsbereich erreicht werden. Bei einer mechanischen Verbindung mittels Gewinde kann diese mechanische Verbindung auch nach längerer Nutzung im Betrieb eines Plasmabrenners einfach und leicht wieder gelöst werden. Die Nachteile der beim Stand der Technik genutzten Leitpasten werden vermieden.

Die Beschichtung kann auf einer der beiden komplementär ausgebildeten Oberflächen im Verbindungsbereich mit Graphitpartikeln, Kohlenstoffnanoröhren, Partikeln eines Metallsulfids oder eines Metallnitrids, insbesondere Bornitrid oder Aluminiumnitrid gebildet sein. Erfindungsgenäß soll die Partikel dabei allein

durch Adhäsivkräfte an der Oberfläche gehalten werden, ohne dass ein organischer oder anorganischer Binder dafür genutzt werden muss.

Erfindungsgemäß weisen die Partikel, insbesondere Graphitpartikel, eine maximale mittlere Partikelgröße d₅₀ von 50 µm, bevorzugt im Bereich maximal 35 µm bis minimal 4 µm auf. Werden Kohlenstoffnanoröhren als Partikel für die Ausbildung einer Beschichtung eingesetzt, können diese in den üblicherweise kommerziell erhältlichen Größen eingesetzt werden.

In den komplementären Bereichen von Bauelement und Halteelement, die zur mechanischen Verbindung genutzt werden, sollte wie bereits angesprochen ein Gewinde ausgebildet sein, mit dem Bauelement und Halteelement form- und kraftschlüssig miteinander verbindbar sind. Es kann sich vorteilhaft um ein Gewinde mit gegenüber einem Normalgewinde reduzierter Steigung handeln (Feingewinde).

Ein Bauelement oder Halteelement kann dabei ausgewählt sein, aus einer Elektrode, einer Elektrodenhalterung, einer Düse, einer Schutzkappe, einer Düsenhalterung und einer Schutzkappenhalterung. Dabei stellt beispielsweise eine Elektrode ein Bauelement und eine Elektrodenhalterung ein Halteelement dar. Eine Düse kann ein Halteelement für eine Düsenschutzkappe sein. Das Bauelement oder Halteelement kann auch eine Elektrodenfassung, die mit einem Emissionseinsatz versehen ist, sein. Der Emissionseinsatz ist in die Elektrodenfassung mit einer Presspassung oder einer Schraubverbindung eingesetzt ist, wobei der Emissionseinsatz bevorzugt aus Wolfram, Hafnium, Zirkonium oder einer Legierung eines dieser Metalle und die Elektrodenfassung aus Kupfer, Silber oder einer Legierung eines dieser Metalle gebildet ist. Bevorzugt kann dabei an der Elektrodenfassung ein äußerer Mantelbereich vorhanden sein, der mit einem komplementär ausgebildeten Bereich eines Elektrodenhalters oder eines Brennerschafts austauschbar verbunden werden kann. Eine der Oberflächen dieser Bereiche kann dabei mit einer Beschichtung versehen sein, um die Nachteile des Standes der Technik insbesondere bei einem erforderlichen Austausch zu vermeiden. Eine Elektrodenfassung kann dabei aus Kupfer, Silber oder einer Legierung eines dieser Metalle gebildet sein.

Eine Elektrode, die mit einer Elektrodenfassung und einem Emissionseinsatz gebildet ist, kann als Spitz- oder Flachelektrode ausgebildet sein.

Ein Bauelement oder Haltelement, das bei der Erfindung einsetzbar ist, kann Bestandteil eines Brenners sein, der mittels eines Fluides gekühlt werden kann, sein.

Bei einem jeweiligen Bauelement oder Halteelement kann es sich bevorzugt um ein Verschleißteil handeln, das bei Bedarf leichter ausgetauscht werden kann, dessen Eigenschaften im Betrieb aber nicht oder nur unwesentlich gegenüber dem Stand der Technik verschlechtert sind.

Vorteilhaft kann ein Bauelement oder Halteelement aus Kupfer, Silber, Zink oder einer Legierung dieser chemischen Elemente gebildet sein.

Bei der Herstellung wird so vorgegangen, dass mindestens eine Oberfläche des komplementären Bereichs eines Bauelements oder Halteelements mit den Partikeln oder mit einer die Partikel enthaltenden Suspension vor der Herstellung einer mechanischen Verbindung zwischen dem jeweiligen Bauelement und Halteelement beschichtet wird. In dem Beispiel, das nicht der Erfindung entspricht, kann aber auch eine organische Schicht, die mit einem Fluor enthaltenden Polymer oder einem Polyamid vor der Herstellung einer mechanischen Verbindung zwischen dem jeweiligen Bauelement und Halteelement ausgebildet werden.

In diesem Beispiel, das nicht der Erfindung entspricht, können bei Ausbildung einer Schicht aus organischem Material Vertiefungen oder Erhebungen, beispielsweise mittels einer Maske oder einer entsprechenden Oberflächenbearbeitung der Oberfläche innerhalb des komplementären Bereichs ausgebildet werden. Es besteht auch die Möglichkeit, lokal definiert ein Trennmittel auf der Oberfläche zu applizieren, anschließend das organische die Schicht bildende Material aufzubringen und dann das Trennmittel wieder zu entfernen. Das Trennmittel kann dabei ein Opfermaterial sein, das thermisch oder mit einem geeigneten Lösungs- oder selektiven Ätzmittel entfernt werden kann. So können einzelne in einem Abstand zueinander angeordnete Erhebungen und Vertiefungen in einem Bereich der Schicht bzw. in einem komplementären Verbindungsbereich erhalten werden. Vorteilhaft können reine Partikel mechanisch, bevorzugt mittels Aufpinseln oder Aufbürsten auf die Oberfläche zur Ausbildung der Beschichtung aufgetragen werden.

Eine Suspension kann durch Aufsprühen, Aufpinseln oder Tauchbeschichten aufgetragen werden. Anschließend und erfindungsgemäß erfolgt eine Trocknung, bei der die flüssigen Bestandteile entfernt werden.

Vorteilhaft kann eine Suspension mit einer bei einer Temperatur von maximal 70 °C, bevorzugt maximal 50 °C in die Gasphase übergehenden Flüssigkeit, die keine Säure bildet, eingesetzt werden. Am günstigsten ist es, wenn die Flüssigkeit geringfügig oberhalb der normalen Raum- bzw. Umgebungstemperatur in die Gasphase übergeht, da dann keine zusätzlichen oder nur geringfügige Trocknungsmaßnahmen erforderlich sind.

Allein oder zusätzlich dazu kann eine Suspension eingesetzt werden, in der Graphitpartikel oder Kohlenstoffnanoröhren bevorzugt mit einem Anteil von mindestens 0,3 Masse-%, besonders bevorzugt mindestens 1 Masse-% enthalten sind.

Wird eine mit Wasser gebildete Suspension, in der Kohlenstoffnanoröhren enthalten sind, eingesetzt, ist es günstig ein Tensid zuzugeben, mit dem eine homogene Verteilung der Kohlenstoffnanoröhren in der Flüssigkeit ermöglicht wird. In diesem Fall sollte das Tensid nach dem Auftrag der Suspension auf die jeweilige Oberfläche entfernt werden, was durch Waschen mit einem geeigneten Lösungsmittel für das Tensid erreicht werden kann.

Als Flüssigkeiten für die die Suspension können Wasser, ein Alkohol, insbesondere Isopropanol oder Ethanol genutzt werden. Als Flüssigkeit kann auch ein Öl eingesetzt werden. Ein Öl kann auch in einer Mischung oder als Lösung mit einem der genannten Flüssigkeiten in der Suspension enthalten sein. Zusätzlich kann/können mindestens ein Schutzkolloid, mindestens ein Konservierungsmittel, mindestens ein Emulgator und/oder mindestens ein Tensid enthalten sein.

Sind Partikel in der Suspension enthalten, sollten diese eine maximale mittlere Partikelgröße von 1 µm aufweisen.

Mit einer erfindungsgemäß vorhandenen bzw. ausgebildeten Beschichtung kann eine verbesserte thermische Leitfähigkeit im Bereich der mechanischen Verbindung zwischen einem Bauelement und einem zur Fixierung dieses Bauelements ausgebildeten Halteelements erreicht werden, die insbesondere bei Nutzung einer Gewindeverbindung auch nach einer Betriebszeit wieder einfach und sicher wieder gelöst werden soll und kann, was beispielsweise bei einem verschleiß- oder schadensbedingt erforderlichen Austausch eines Bau- oder Halteelements erforderlich sein kann.

Eine Beschichtung, die ausschließlich mit Graphitpartikeln gebildet ist, sollte vorteilhaft mit mindestens drei übereinander angeordneten Partikellagen ausgebildet worden sein.

Da die Beschichtung auch sicher dauerhaft auf der jeweiligen Oberfläche haftet, treten die Nachteile von bisher eingesetzten Leitpasten nicht auf.

Nachfolgend soll die Erfindung beispielhaft näher erläutert werden.

Dabei zeigt:

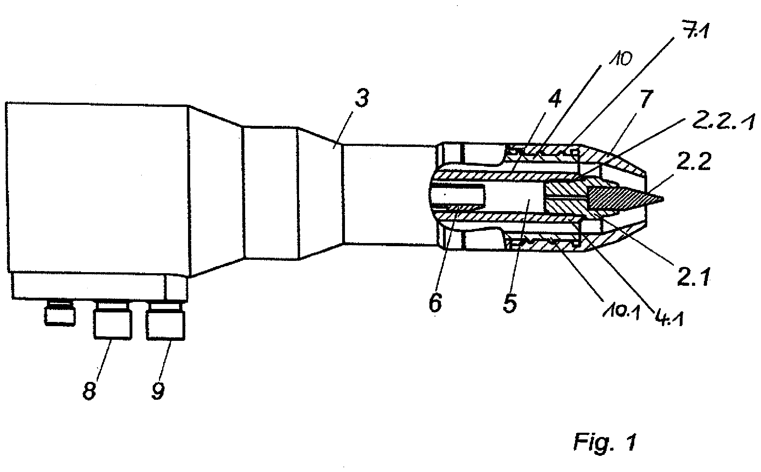

Figur 1 eine Schnittdarstellung eines Brenners für das Wolfram-Inertgas-Schweißen.

Die in Figur 1 gezeigte Schnittdarstellung macht deutlich, dass bei einem solchen Brenner mehrere Elemente ein Bauelement oder Halteelement im Sinne der Erfindung sein können. So ist in einer Elektrodenfassung 2.1 ein Emissionseinsatz 2.2 in eine Bohrung eingepresst. Die Elektrodenfassung 2.1. ist bei diesem Beispiel aus Kupfer hergestellt worden. Der Emissionseinsatz 2.2 besteht aus Wolfram.

In einem Bereich 2.1.1 ist ein Gewinde an einer äußeren Mantelfläche der Elektrodenfassung 2.1 ausgebildet. Dieser Bereich mit dem Gewinde 2.1.1 ist in ein komplementär ausgebildetes Gewinde, insbesondere ein Feingewinde eingeschraubt, das in einem Bereich 4.1 des Elektrodenhalters 4, der im Gehäuse 3 des Brenners gehalten ist. angeordnet ist. Die Elektrodenfassung 2.1 kann dabei ein Bauelement und der Elektrodenhalter 4 ein Halteelement im Sinne der Erfindung bilden.

Bevorzugt auf der Oberfläche des Gewindes 2.1.1, das im Bereich der Elektrodenfassung 2.1 ausgebildet ist, ist eine Beschichtung ausgebildet.

Die Beschichtung kann, wie nachfolgend beschrieben, auf die Oberfläche des Gewindes 2.1.1 im Bereich aufgebracht werden, bevor die Elektrodenfassung 2.1 mit dem darin befestigten Emissionseinsatz 2.2 durch Verschrauben mit dem Elektrodenhalter 4 form- und kraftschlüssig verbunden werden kann.

Im vorliegenden Ausführungsbeispiel wird aus pulverförmigem Graphit und Ethanol eine Suspension erstellt, mit der das Gewinde 2.1.1 durch Eintauchen und anschließender Lufttrocknung beschichten wird. In der Suspension war Graphit mit einem Feststoffanteil im Bereich 0,5 Masse % bis 5 Masse % insbesondere 2 Masse % bis 5 Masse-% enthalten.

Im Inneren des Gehäuses 3 des Brenners ist auch eine Düse 10 vorhanden, die zumindest im distalen Bereich als Hohlzylinder ausgebildet ist, und die Düse so 10 dabei so dimensioniert und angeordnet ist, dass Elektrodenfassung 2.1 mit Emissionseinsatz 2.2 und Elektrodenhalter 4 in ihrem Inneren zumindest teilweise angeordnet sind, und ein Spalt zur Führung eines Inertgases aus dem Brenner heraus ausgebildet ist.

An einer äußeren Mantelfläche der Düse 10 ist ein Außengewinde 10.1 ausgebildet, auf das ein Innengewinde 7.1 einer Schutzkappe 7 aufgeschraubt und so Düse 10 und Schutzkappe 7 miteinander form- und kraftschlüssig verbunden werden können. Das Außengewinde 10.1, das in einem Bereich der Düsenoberfläche und das Innengewinde 7.1, das an der Innenwand der Schutzkappe 7 ausgebildet ist, bilden komplementär ausgebildete Bereiche. Bevorzugt kann die Oberfläche des Innengewindes 7.1 der Schutzkappe 7 mit einer Beschichtung versehen sein, da dies bei einem ggf. verschleißbedingten Austausch vorteilhaft sein kann.

Die Beschichtung kann, wie bereits bei der Ausbildung einer Beschichtung im Bereich des Gewindes 2.1.1 beschrieben, ausgebildet werden.

Die Düse 10 kann also ein Halteelement und die Schutzkappe 7 ein Bauelement im Sinne der Erfindung darstellen.

Selbstverständlich können auch weitere Elemente des in Figur 1 gezeigten Brenners erfindungsgemäß ausgebildet und miteinander verbunden werden. In nicht dargestellter Form kann dies beispielsweise die Düse 10 in einer nicht gezeigten Düsenhalterung im Gehäuse 3 sein.

Bei dem gezeigten Beispiel sind am Gehäuse 3 auch noch eine Zuführung 8 und eine Abführung 9 für ein in das Gehäuse 3 bis in einen Hohlraum 5 durch ein Kühlrohr 6 geführtes Kühlmedium gezeigt.

## Patentansprüche

1. Bauelement oder Halteelement, die in einem komplementär ausgebildeten Bereich mechanisch miteinander verbindbar und für die Plasmabearbeitung oder die thermische Bearbeitung von Werkstücken unter Nutzung eines elektrischen Lichtbogens einsetzbar sind,
**dadurch gekennzeichnet, dass** die Oberfläche des Bauelements (2.1,7) beziehungsweise des Halteelements (4, 10) im komplementär ausgebildeten Bereich ausschließlich mit einer mit Partikeln gebildeten Beschichtung versehen ist, wobei die Partikel elektrisch und thermisch leitfähig sowie allein durch Adhäsionskräfte an der Oberfläche gehalten sind, ohne dass ein organischer oder anorganischer Binder genutzt werden muss, und wobei die Partikel eine mittlere Partikelgröße d₅₀ von 25 µm, bevorzugt maximal 20 µm aufweisen.

2. Bauelement oder Halteelement nach Anspruch 1, **dadurch gekennzeichnet, dass** die Beschichtung mit Graphitpartikeln, Kohlenstoffnanoröhren, einem Metallsulfid, einem Metallnitrid, insbesondere Bornitrid oder Aluminiumnitrid gebildet ist.

3. Bauelement oder Halteelement nach einem der vorhergehenden Ansprüche, **dadurch gekennzeichnet, dass** das jeweilige Bau- oder Halteelement (2.1, 7, 4, 10) austauschbarer Bestandteil eines Wolfram-Inertgasschweißbrenners (WIG), eines Plasmaschweiß-, eines Plasmaschneidbrenners oder eines MIG/MAG Brenner ist.

4. Bauelement oder Halteelement nach einem der vorhergehenden Ansprüche, **dadurch gekennzeichnet, dass** die Partikel, insbesondere Graphitpartikel eine maximale mittlere Partikelgröße d₅₀ von 25 µm, bevorzugt maximal 20 µm aufweisen.

5. Bauelement oder Halteelement nach einem der vorhergehenden Ansprüche, **dadurch gekennzeichnet, dass** in den komplementären Bereichen von Bauelement (2.1, 7) und Halteelement (4, 10) ein Gewinde (2.1.1) ausgebildet ist, mit dem Bauelement (2.1, 7) und Halteelement (4, 10) form- und kraftschlüssig miteinander verbindbar sind.

6. Bauelement oder Halteelement nach einem der vorhergehenden Ansprüche, **dadurch gekennzeichnet, dass** ein Bauelement (2.1, 7) oder Halteelement (4, 10) ausgewählt ist, aus einer Elektrode, einer Elektrodenhalterung, einer Düse (10), einer Schutzkappe (7), einer Düsenhalterung und Schutzkappenhalterung ist.

7. Bauelement oder Halteelement nach einem der vorhergehenden Ansprüche, **dadurch gekennzeichnet, dass** Bauelement (2.1, 7) oder Halteelement (4, 10) aus Kupfer, Silber, Zink oder einer Legierung dieser chemischen Elemente gebildet ist.

8. Bauelement oder Halteelement nach einem der vorhergehenden Ansprüche, **dadurch gekennzeichnet, dass** das Bauelement (2.1, 7) oder Halteelement (4, 10) eine Elektrodenfassung (2.1), in die eine Elektrode mit einer Presspassung oder einer Schraubverbindung eingesetzt ist, wobei die Elektrode bevorzugt aus Wolfram, Hafnium, Zirkonium oder einer Legierung eines dieser Metalle und die Elektrodenfassung aus Kupfer, Silber oder einer Legierung eines dieser Metalle gebildet ist.

9. Verfahren zur Herstellung einer mechanischen Verbindung zwischen einem Bauelement und einem Halteelement nach einem der vorhergehenden Ansprüche, **dadurch gekennzeichnet, dass** eine Oberfläche des komplementären Bereichs des Bauelements (2.1, 7) beziehungsweise des Halteelements (4, 10) mit den Partikeln oder mit einer die Partikel enthaltenden Suspension vor der Herstellung einer mechanischen Verbindung zwischen dem jeweiligen Bauelement (2.1, 7) und Halteelement (4, 10) beschichtet wird, wobei anschließend an den Auftrag einer Suspension eine Trocknung erfolgt, bei der die flüssigen Bestandteile entfernt werden wobei die Partikel eine mittlere Partikelgröße d₅₀ von 25 µm, bevorzugt maximal 20 µm aufweisen.

10. Verfahren nach dem vorhergehenden Anspruch, **dadurch gekennzeichnet, dass** die reinen Partikel mechanisch, bevorzugt mittels Aufpinseln oder Aufbürsten auf die Oberfläche aufgetragen werden oder die Suspension durch Aufsprühen, Aufpinseln oder Tauchbeschichten aufgetragen wird.

11. Verfahren nach einem der zwei vorhergehenden Ansprüche, **dadurch gekennzeichnet, dass** eine Suspension mit einer bei einer Temperatur von maximal 70 °C, bevorzugt maximal 50 °C in die Gasphase übergehenden Flüssigkeit, die keine Säure bildet, eingesetzt wird und/oder
eine Suspension eingesetzt wird, in der Kohlenstoffnanoröhren mit einem Anteil von mindestens 0,5 Masse-% bis 5 Masse-%, bevorzugt mindestens 1 Masse-% enthalten sind, eingesetzt wird.

12. Verfahren nach einem der drei vorhergehenden Ansprüche, **dadurch gekennzeichnet, dass** die Suspension mit Wasser, einem Alkohol, insbesondere Isopropanol oder Ethanol, und/oder einem Öl hergestellt wird.

## Claims

1. A component or retaining element which are mechanically connectable to one another in a region formed in a complementary manner and are usable for the plasma processing or thermal processing of workpieces with use of an electric arc,
**characterized in that** the surface of the component (2.1, 7) or of the retaining element (4, 10) in the region formed in a complementary manner is provided exclusively with a coating formed with particles, wherein
the particles are electrically and thermally conductive and are held on the surface solely by adhesion forces, without the need to use an organic or inorganic binder, and wherein the particles have a d₅₀ mean particle size of 25 µm, preferably at most 20 µm.

2. The component or retaining element according to claim 1, **characterized in that** the coating is formed with graphite particles, carbon nanotubes, a metal sulfide, a metal nitride, in particular boron nitride or aluminum nitride.

3. The component or retaining element according to any one of the preceding claims, **characterized in that** the respective component or retaining element (2.1, 7, 4, 10) is an exchangeable part of a tungsten inert gas (TIG) welding torch, a plasma welding torch, a plasma arc torch or a MIG/MAG torch.

4. The component or retaining element according to any one of the preceding claims, **characterized in that** the particles, in particular graphite particles, have a maximum d₅₀ mean particle size of 25 µm, preferably at most 20 µm.

5. The component or retaining element according to any one of the preceding claims, **characterized in that** a thread (2.1.1) is provided in the complementary regions of the component (2.1, 7) and retaining element (4, 10) and may be used to connect the component (2.1, 7) and retaining element (4, 10) to one another form-fittingly or in a frictionally engaged manner.

6. The component or retaining element according to any one of the preceding claims, **characterized in that** a component (2.1, 7) or retaining element (4, 10) is selected from an electrode, an electrode mount, a nozzle (10), a protective cap (7), a nozzle mount and protective cap mount.

7. The component or retaining element according to any one of the preceding claims, **characterized in that** the component (2.1, 7) or retaining element (4, 10) is formed from copper, silver, zinc or an alloy of these chemical elements.

8. The component or retaining element according to any one of the preceding claims, **characterized in that** the component (2.1, 7) or retaining element (4, 10) is an electrode socket (2.1), in which an electrode is inserted with a press fit or a screw connection, wherein the electrode is preferably formed from tungsten, hafnium, zirconium or an alloy of one of these metals and the electrode socket is formed from copper, silver or an alloy of one of these metals.

9. A method for producing a mechanical connection between a component and a retaining element according to any one of the preceding claims, **characterized in that** a surface of the complementary region of the component (2.1, 7) or of the retaining element (4, 10) is coated with the particles or with a suspension containing the particles before a mechanical connection is established between the respective component (2.1, 7) and retaining element (4, 10), wherein a drying operation is performed subsequently to the application of a suspension, during which drying operation the liquid constituents are removed, wherein the particles have a d₅₀ mean particle size of 25 µm, preferably at most 20 µm.

10. The method according to the preceding claim, **characterized in that** the pure particles are applied mechanically to the surface, preferably by being painted on or brushed on or the suspension is applied by being sprayed on, brushed on or by dip-coating.

11. The method according to any one of the two preceding claims, **characterized in that** a suspension comprising a liquid that transitions into the gas phase at a temperature of at most 70°C, preferably at most 50°C and that does not form any acid is used,
and/or
a suspension in which carbon nanotubes with a proportion of at least 0.5 mass % to 5 mass %, preferably at least 1 mass % are contained is used.

12. The method according to any one of the three preceding claims, **characterized in that** the suspension is produced with water, an alcohol, in particular isopropanol or ethanol and/or an oil.

## Revendications

1. Élément de construction ou élément de support qui peuvent être reliés mutuellement mécaniquement dans une zone conçue de manière complémentaire et qui peuvent être utilisés pour le traitement au plasma ou le traitement thermique de pièces à usiner à l'aide d'un arc électrique,
**caractérisé en ce que** la surface de l'élément de construction (2.1,7) ou de l'élément de support (4, 10) dans la zone conçue de manière complémentaire est exclusivement pourvue d'un revêtement formé de particules, dans lequel
les particules sont électriquement et thermiquement conductrices et maintenues à la surface uniquement par des forces d'adhérence, sans qu'il soit nécessaire d'utiliser un liant organique ou inorganique, et dans lequel les particules présentent une taille moyenne de particules dso de 25 µm, de préférence au maximum de 20 µm.

2. Élément de construction ou élément de support selon la revendication 1, **caractérisé en ce que** le revêtement est formé de particules de graphite, de nanotubes de carbone, d'un sulfure de métal, d'un nitrure de métal, en particulier de nitrure de bore ou de nitrure d'aluminium.

3. Élément de construction ou élément de support selon l'une quelconque des revendications précédentes, **caractérisé en ce que** l'élément de construction ou l'élément de support respectif (2.1, 7, 4, 10) est une pièce de construction interchangeable d'une torche de soudage au gaz inerte-tungstène (TIG), d'une torche de soudage au plasma, d'une torche de découpe au plasma ou d'une torche MIG/MAG.

4. Élément de construction ou élément de support selon l'une quelconque des revendications précédentes, **caractérisé en ce que** les particules, en particulier des particules de graphite, présentent une taille de particule moyenne maximale dso de 25 µm, de préférence au maximum de 20 µm.

5. Élément de construction ou élément de support selon l'une quelconque des revendications précédentes, **caractérisé en ce qu'**un filetage (2.1.1) est formé dans les zones complémentaires de l'élément de construction (2.1, 7) et de l'élément de support (4, 10), avec lequel l'élément de construction (2.1, 7) et l'élément de support (4, 10) peuvent être connectés l'un à l'autre par complémentarité de forme et de force.

6. Élément de construction ou élément de support selon l'une quelconque des revendications précédentes, **caractérisé en ce qu'**un élément de construction (2.1, 7) ou un élément de support (4, 10) est choisi parmi une électrode, un support d'électrode, une buse (10), un capuchon de protection (7), un support de buse et un support de capuchon de protection.

7. Élément de construction ou élément de support selon l'une quelconque des revendications précédentes, **caractérisé en ce que** l'élément de construction (2.1, 7) ou l'élément de support (4, 10) est constitué de cuivre, d'argent, de zinc ou d'un alliage de ces éléments chimiques.

8. Élément de construction ou élément de support selon l'une quelconque des revendications précédentes, **caractérisé en ce que** l'élément de construction (2.1, 7) ou l'élément de support (4, 10) est une douille d'électrode (2.1) dans laquelle est insérée une électrode avec un ajustement serré ou une connexion vissée, l'électrode étant formée de préférence en tungstène, en hafnium, en zirconium ou en un alliage d'un de ces métaux et la douille d'électrode étant formée en cuivre, en argent ou en un alliage d'un de ces métaux.

9. Procédé de fabrication d'une connexion mécanique entre un élément de construction et un élément de support selon l'une quelconque des revendications précédentes, **caractérisé en ce qu'**une surface de la zone complémentaire de l'élément de construction (2.1, 7) ou de l'élément de support (4, 10) est revêtue avec les particules ou avec une suspension contenant les particules avant la fabrication d'une connexion mécanique entre l'élément de construction (2.1, 7) et l'élément de support (4, 10) respectif, un séchage ayant lieu après l'application d'une suspension, par l'intermédiaire duquel les éléments de construction liquides sont éliminés, les particules présentant une taille moyenne de particules d₅₀ de 25 µm, de préférence au maximum de 20 µm.

10. Procédé selon la revendication précédente, **caractérisé en ce que** les particules pures sont appliquées mécaniquement, de préférence au moyen d'un étalement ou d'un brossage, sur la surface, ou la suspension est appliquée par pulvérisation, brossage ou application en revêtement par immersion.

11. Procédé selon l'une quelconque des deux revendications précédentes, **caractérisé en ce qu'**une suspension avec un liquide qui passe en phase gazeuse à une température maximale de 70°C, de préférence maximale de 50°C, et qui ne forme pas d'acide, est utilisée
et/ou
une suspension dans laquelle des nanotubes de carbone contenant au moins 0,5 % en masse à 5 % en masse, de préférence au moins 1 % en masse, est utilisée.

12. Procédé selon l'une quelconque des trois revendications précédentes, **caractérisé en ce que** la suspension est préparée avec de l'eau, un alcool, en particulier de l'isopropanol ou de l'éthanol, et/ou une huile.
